Europäisches Patentamt

European Patent Office

Office européen des brevets

(11) Publication number: **0 352 053**
**A1**

# EUROPEAN PATENT APPLICATION

(21) Application number: **89307242.1**

(22) Date of filing: **18.07.89**

(51) Int. Cl.⁵: **F 27 B 9/24**

(30) Priority: **22.07.88 GB 8817549**

(43) Date of publication of application:
**24.01.90 Bulletin 90/04**

(84) Designated Contracting States:
**BE DE ES FR GB IT NL**

(71) Applicant: **NAYLOR BROS. (CLAYWARE) LIMITED**
**Clough Green**
**Cawthorne Barnsley S75 4AD (GB)**

(72) Inventor: **Hope, Victor David**
**14 Haigh Close**
**Hoylandswaine Sheffield S30 6LF (GB)**

**Lodge, Trevor**
**27 Greenside**
**Denby Dale near Huddersfield HD8 8SL (GB)**

(74) Representative: **Gura, Henry Alan et al**
**MEWBURN ELLIS & CO. 2/3 Cursitor Street**
**London EC4A 1BQ (GB)**

(54) **Clayware pipe manufacture.**

(57) A method of manufacture of clayware pipes including the step of causing the pipes to roll along at least a part of the length of a kiln (10). So that the pipes can be fired consistently and economically whilst maintaining good straightness and good surface finish, they are caused to roll by a plurality of vertically movable elements (14) upper extremities of which contact the pipes and define a series of ripples moving along the kiln (10).

Fig 4a.
Fig 4b.
Fig 4c.
Fig 4d.
Fig 4e.
Fig 4f.

EP 0 352 053 A1

## Description

### Clayware pipe manufacture.

The invention relates to clayware pipe manufacture, and in particular to the manufacture of clayware pipes of the kind used as drainage or sewer pipes, cable ducts and the like, which may be connected end to end by means of connecting sleeves or spigot and socket joints. So that leakage does not take place, and so that the connection of the pipes can be effected quickly and easily, it is essential that the surfaces of the end portions of the pipes should be as smooth as possible, and should be of the required circumference within close dimensional limits. It is also important that such pipes should be as straight as possible.

It has been known to manufacture clayware pipes by a process including the firing of groups of pipes carried through a tunnel kiln and standing vertically on respective carriers. Small bore pipes have an inherent lack of stability in firing and when pyroplastic they often deform slightly and emerge as bent pipes. This method has also resulted in high energy costs because the carriers absorb heat which is subsequently wasted. Also, because of the difficulty in maintaining consistent firing conditions at all places within the groups of pipes, the strengths and dimensions of the finished pipes usually show substantial variability.

It has also been known for clayware pipes to be fired by being conveyed longitudinally through the kiln on a series of driven rollers extending transversely of the kiln, the pipes being located by spacers on the rollers. However, whilst this method has been found to give excellent results for the manufacture of relatively small diameter pipes, it is unsuitable for the production of larger diameter pipes. It has also been known to progress clayware pipes through a kiln on an endless conveyor and to cause the pipes to roll along a surface, so as to progress along the kiln, over at least that part of the length of the kiln in which the pipes are at their greatest temperature. However, this may cause scuffing of the surfaces of the pipes, coupled with the fact that the endless conveyor mechanism has again been the cause of substantial heat loss by carrying heat through the kiln system. The need for frequent replacement of these conveyor parts inevitably results in significantly increased cost of the finished clayware pipes.

The invention as claimed is intended to provide a remedy. It solves the problem of how to fire clayware pipes in a most convenient manner.

The advantages offered by the invention are, mainly, that it provides a method of and means for the manufacture of clayware pipes whereby it enables the pipes to be fired consistently and economically whilst maintaining good straightness and accurate dimensions together with good surface finish of the finished products.

One way of carrying out the invention is described in detail below with reference to drawings which illustrate, by way of example, one specific embodiment, in which:-

Figure 1 is a diagrammatic view showing a typical temperature profile along the length of a kiln for the firing of clayware pipes,

Figure 2 is a semi-diagrammatic side view of a part of a kiln embodying the invention,

Figure 3 is a sectional view on the line 3-3 in Figure 2,

Figures 4a to 4f are views drawn to a somewhat larger scale than Figures 2 and 3 and showing several of the pipes of Figure 2 being progressed through the kiln,

Figure 5 is a sectional view, drawn to an even larger scale, of one of a plurality of vertically movable elements which extend through respective holes in the underside of the kiln from apparatus beneath the kiln,

Figure 6 is a view of the apparatus beneath the kiln, on the line 6-6 in Figure 7, and

Figure 7 is a plan view of the apparatus shown in Figure 6.

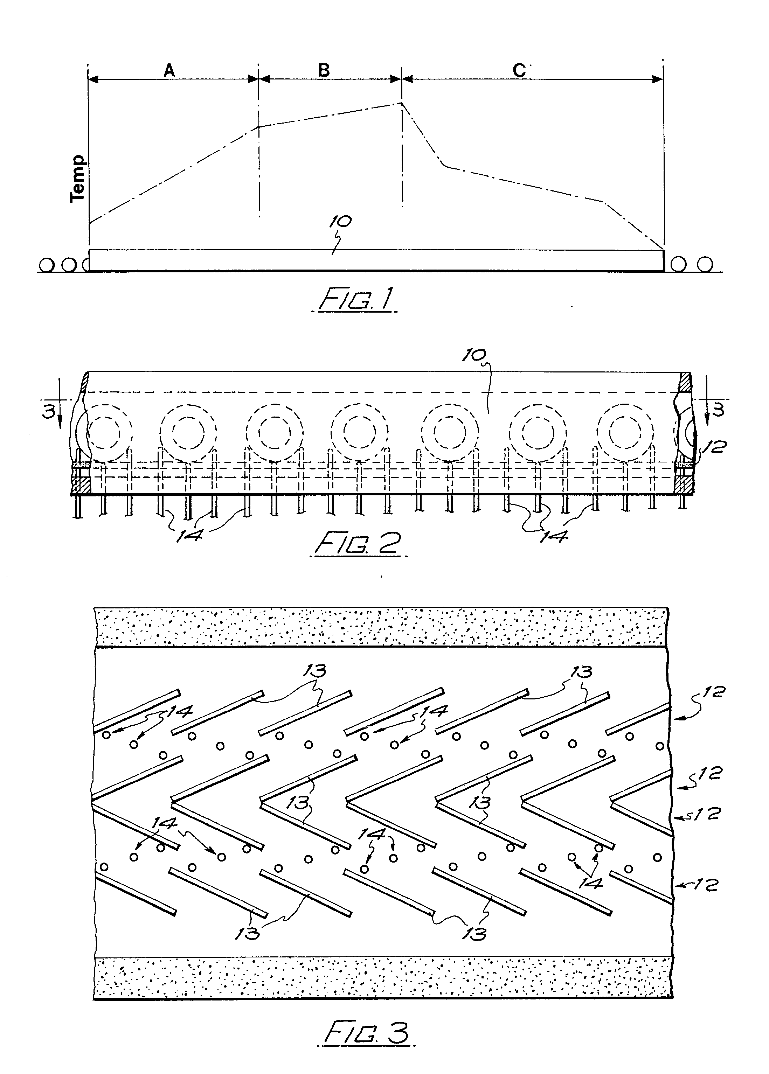

Referring now to Figure 1 of the drawings, the apparatus there illustrated for the manufacture of clayware pipes includes a kiln, generally indicated 10, through which the pipes are caused to roll on laterally spaced supports 12 which will be described presently. Before having been progressed through the kiln 10, the pipes will have been extruded from a prepared mix of clayware material and the so-called green pipe lengths will have been dried.

Burners (not shown) are provided within a firing zone of the kiln and means (not shown) which constantly monitor the temperature at closely spaced points along the length of the kiln control the operation of the burners so that the pipes are subjected to a temperature variation somewhat as shown diagrammatically above the kiln in Figure 1. Means are provided for progressing the pipes through the kiln at a relatively slow but substantially constant rate of travel so that said pipes are gradually increased in temperature during their progress through a pre-heating zone A, brought to a pyroplastic condition during their progress through a main firing zone B, and allowed to cool somewhat during their progress through a cooling zone C. (It should be noted that Figure 1 is purely diagrammatic and that the kiln is not drawn to scale. In addition, the temperature profile can vary, according to the size of pipes being fired for example). The manner in which the pipes are brought into position, in turn, at the inlet end of the kiln to closely follow, in spaced relation, a previously positioned pipe is not shown. The manner in which the pipes, having been progressed through the kiln, are transported away from the kiln either individually or in groups is not shown.

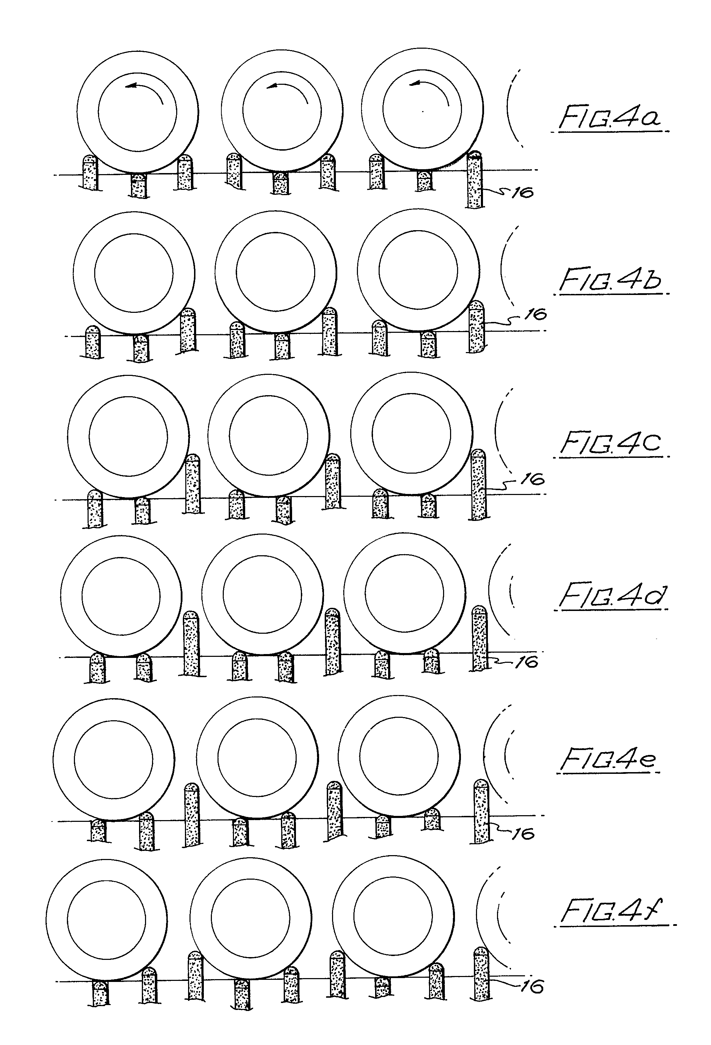

Referring now in particular to Figures 2 and 3, these illustrate a short length of a kiln embodying the invention. In Figure 3 it can be seen that the laterally spaced supports 12 are provided in the form of four discontinuous supports each constituted by a plurality of staggered support elements 13. As can be seen in Figure 5, the support elements 13 rest on respective pairs of pillars 11 upstanding from the floor of the kiln, said pillars being of tubular form and extending through heat insulation material which lines the floor of the kiln, as shown. ( A similar thickness of the heat insulation material also lines the walls and roof of the kiln).

The support elements are disposed in echelon, as shown in Figure 3 and overlap each other, in a direction longitudinal of the kiln, whilst being spaced apart laterally. In this way it will be understood that the portions of the peripheral surfaces of the pipes which contact said support elements will be constantly changing so that said surfaces will tend not to become marked during the passage of the pipes through the kiln. A further advantage of this arrangement is that any pieces of debris becoming detached from the surfaces of the pipes as they progress through the kiln will fall into the spaces between the support elements and will not remain as pieces of debris over which subsequent pipes must ride.

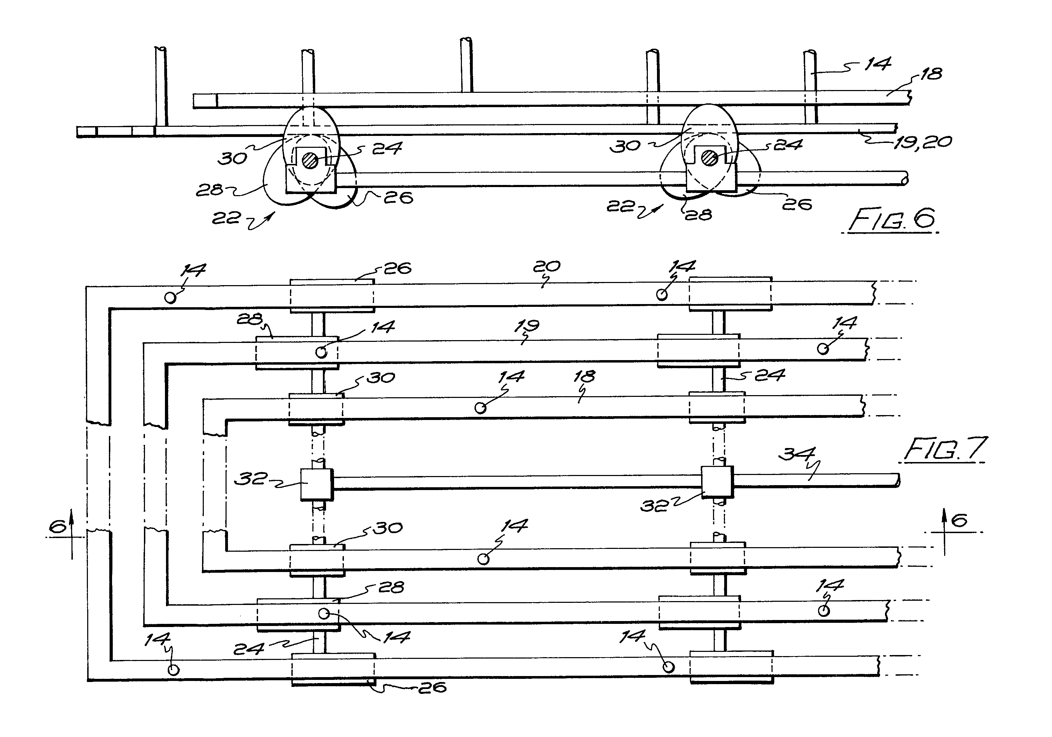

The means provided for progressing the pipes through the kiln are illustrated partly in Figures 2 and 3, Figures 4a to 4f and Figure 5, which show the upper ends of vertically movable elements, generally indicated 14, projecting upwards into the firing chamber of the kiln, and partly in Figures 6 and 7 which illustrate mechanism for controlling the up and down movement of said elements.

As shown in Figure 5, the vertically movable elements 14 are constituted by lengths of steel tube 17 surmounted by tubular lengths of refractory material 16 which constitute refractory head portions protruding into the firing chamber of the kiln through respective holes in the floor of the latter. The upper end of each length of steel tube 17 is provided with an integral cup element 19 in which the lower end of the respective refractory head portion is secured. The upper ends of the tubular refractory head portions are closed off by respective refractory cap elements 15 which are cemented in position.

The hollow refractory head portions of the elements 14 are closely embraced by respective washers 21 which are clipped in position beneath the floor of the firing chamber of the kiln, the arrangement being such that said washers can move laterally to accommodate any variation in the location of the elements. The washers serve to limit the flow of gases through the holes through which the elements extend and thus to minimise loss of heat.

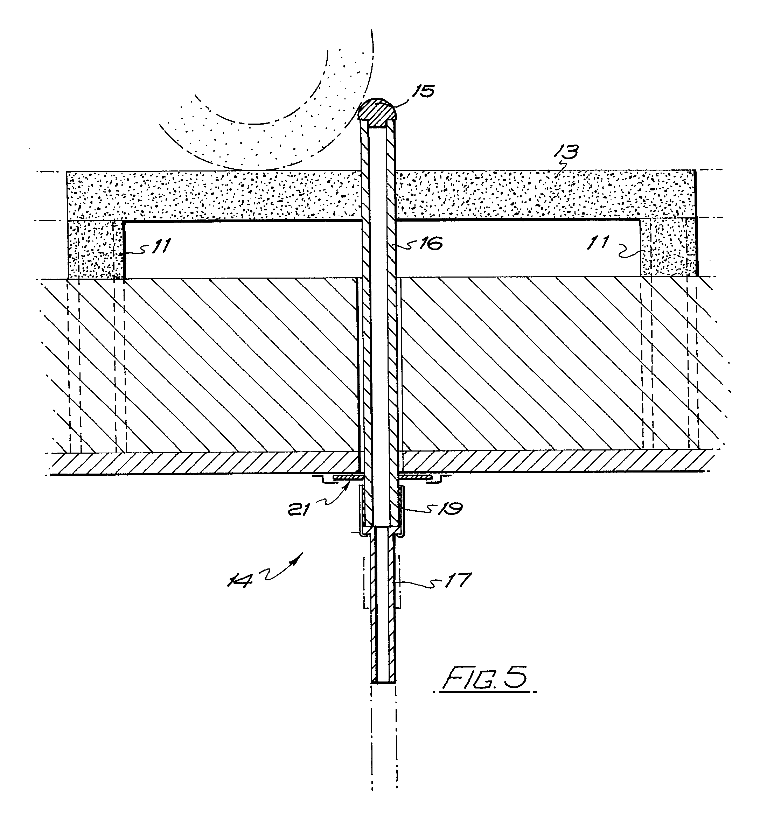

The elements 14 are controlled in such a way that they move up and down in timed relation, the movements of their refractory head portions, in effect, progressing along the firing chamber of the kiln at the required rate of movement of the pipes. The arrangement is such that, with reference to the pipes shown in Figure 4a, the elements immediately to the right of each pipe are moving upwards so that the pipes are being displaced towards the left. As the laterally spaced pairs of elements which the pipes have just moved over centre start to rise, the pairs of elements immediately ahead of the pipes move downwards. It will be seen that when the elements immediately to the right of each pipe have reached their fully raised positions (see Figures 4c and 4d) the elements which in Figures 4a and 4b were moving the pipes forwards have been left behind. In positions 4c, 4d, 4e and 4f the pipes are being displaced by the next laterally spaced pair of elements over centre of which they were moving in Figures 4a and 4b. The elements which in Figures 4a and 4b were moving upwards to displace the pipes forwardly are in Figures 4e and 4f moving downwards in such a way as to check the forward motion of the following pipes. Consequently, it will be understood that each pipe is progressed forwardly by the elements which are rising and are prevented from overrunning by the elements which are being lowered. In other words, the up and down movements of the elements 14 are such that the pipes are moved through the firing chamber of the kiln at the required rate of motion and simultaneously held at controlled spacings from each other.

Referring now in particular to Figures 6 and 7, it will be seen that the pairs of vertically movable elements 14 are spaced apart along the length of the kiln. However, although arranged in laterally spaced pairs moving in unison so that the pipes are maintained with their axes perpendicular to the length of the kiln, the elements are provided in two laterally spaced sets, the elements of each laterally spaced set being constituted by three rows of elements arranged in echelon. The elements of each row of elements are constituted by every third element of the particular laterally spaced set. The elements of each row of elements are connected to a respective one of three vertically movable frame structures 18, 19 and 20 which are mounted beneath the kiln.

The frame structures 18, 19 and 20 are controlled by a series of mechanisms 22 spaced apart longitudinally of the kiln and imparting the required up and down motion to the respective frame structures. As shown, the mechanisms 22 each include a rotatable cross shaft 24 carrying pairs of cams 26,26, 28,28 and 30,30, on which the respective frames are mounted, the pairs of cams being angularly spaced apart at 120° intervals. The cross shafts are driven by respective gear units 32, these being driven by a common drive shaft 34 extending the full length of the kiln from a geared down variable speed motor unit (not shown). It will be understood that the out-of-phase relationship of the three separate pairs of cams on each cross shaft is the same as that required in the movement of the three rows of elements 14 in each laterally spaced set whereby, referring to the elements shown in Figures 4a to 4f, as the elements over centre of which the pipes have just moved start to move upwards, the elements immediately ahead of the pipes move downwards.

The apparatus just described has a number of advantages. Primarily, it is advantageous for the pipes to be caused to roll along the length of the kiln because during their passage through that part of the firing chamber of the kiln in which they are in a pyroplastic state they tend to remain in a dimensionally acceptable and straight form. In addition, the action of the head portions of the elements 14 on the surfaces of the pipes should result in a minimum of scuffing of said surfaces, this being because during the initial upward movement of each vertically movable element there is no appreciable movement of the head end relative to the surface of the pipe concerned. Secondly, because of the fact that the vertically movable elements remain in the same positions longitudinally of the kiln they do not thereby carry heat out of the kiln. The refractory head portions 16 of the elements 14 do move vertically in and out of the firing chamber but they are of relatively low thermal mass and the heat loss is therefore small. A very significant and advantageous fact is that the refractory head portions of the elements 14 remain at a substantially constant temperature throughout the operation of the kiln instead of being subjected to cyclical heating and cooling. Consequently, the refractory head portions can be expected to have a relatively long life. When they do require renewal after long service the removal of the head portions and their replacement by new head portions will be a relatively simple and inexpensive operation. The vertically movable frame structures which carry the respective rows of elements 14 are located in a temperate environment and are relatively slow moving. These structures and the mechanisms for moving them should not therefore be subject to any appreciable wear.

Various modifications may be made. For example, although in the illustrated example the pipes are shown to be movable along horizontal support surfaces, it may be found advantageous for said surfaces to be either downwardly or upwardly inclined at least in some part of the kiln. One possibility would be for the support surfaces to be downwardly inclined, through at least a part of the firing chamber of the kiln, whereby said pipes would tend to roll forwards under their own weight and the amount of pressure required to be imposed on them by the vertically movable elements would therefore be reduced. Indeed, if the support surfaces were downwardly inclined sufficiently to produce an actual rolling forwards of the pipes, the function of the vertically movable elements would simply be to apply a retarding pressure to said pipes and to hold them at controlled spacings from each other.

The mechanisms provided for moving the frame structures 18, 19 and 20 vertically up and down may be of various forms. For example, a variation on the illustrated arrangement would be to mount the frame structures on respective sets of cam plates, said cam plates being arranged to reciprocate in an apropriate out of phase relationship. However, the vertically movable structures to which the elements of each row of elements are connected need not necessarily be in the form of frame structures; they could quite well be longitudinally extending beam members. Indeed, it would be quite feasible for such vertically movable structure to be entirely replaced by mechanism for driving up and down the vertically movable elements individually, for example by respective variable speed motors which are electronically controlled. This would in fact enable the control means to be programmed for progressing pipes of any one of a wide range of sizes through the kiln. In other words, it would then be a relatively simple matter to vary the shapes and sizes of the series of ripples or movements generated and progressing along the firing chamber at the required rate of motion of the pipes.

## Claims

1. A method of manufacture of clayware pipes, the method including the step of causing the pipes to roll along at least a part of the length of a kiln (10), characterised in that said rolling movement of the pipes is controlled by a plurality of vertically movable elements (14), said vertically movable elements being operated in such a way that their upper extremities which contact the pipes define a series of ripples or movements progressing along the firing chamber of the kiln at the required rate of motion of the pipes, whereby they control the movement of said pipes, through said at least part of the firing chamber of the kiln, at the required rate of motion whilst simultaneously holding said pipes at controlled spacings from each other.

2. Apparatus for the manufacture of clayware pipes, the apparatus including a kiln (10) through at least a part of the firing chamber of which there are means for controlling rolling movement of the pipes at a controlled rate, characterised in that the means for controlling the rolling movement of the pipes along said firing chamber comprise a plurality of vertically movable elements (14) equally spaced along the length of the kiln, said vertically movable elements being operated in such a way that their upper extremities which are to contact the pipes define a series of ripples or movements progressing along the firing chamber at the required rate of motion of the pipes, thereby controlling the movement of said pipes, through said at least part of the firing chamber, at the required rate of motion whilst simultaneously holding said pipes at controlled spacings from each other.

3. Apparatus according to claim 2, in which the vertically movable elements (14) are movable in such a way that they progress the pipes, or control the movement of said pipes, along the firing chamber of the kiln at a substantially constant rate.

4. Apparatus according to claim 2, in which the vertically movable elements (14) are movable in such a way that they progress the pipes, or control the movement of said pipes, through the kiln at different rates of movement.

5. Apparatus according to any one of claims 2 to 4, in which the vertically movable elements (14) are provided with refractory head portions (16) which are slidable through respective apertures in the underside of the firing chamber of the kiln.

6. Apparatus according to claim 5, in which the refractory head portions (16) are closely embraced by respective washers (21) which are clipped in position beneath the floor of the firing chamber of the kiln and can move laterally to accommodate any variation in the location of the apertures relative to the elements, the arrangement being such that said washers serve to limit the flow of gases through the holes through which the elements extend and thus to minimise loss of heat.

7. Apparatus according to any one of claims 2 to 6, in which the vertically movable elements (14) are provided in two or more laterally spaced sets.

8. Apparatus according to claim 7, in which the elements of each laterally spaced set are constituted by three or more rows of elements and each row of elements is constituted by every third element or such other number of elements as the number of rows of elements of the particular laterally spaced set.

9. Apparatus according to claim 8, in which each row of elements is connected to a respective one of several frame structures (18, 19, 20) mounted beneath the kiln (10), each frame structure being controlled by a series of mechanisms (22) spaced apart longitudinally of the kiln and imparting the required vertical movements to said frame structures.

10. Apparatus according to claim 9, in which the mechanisms are constituted by groups of cams (26,26, 28,28, 30,30) arranged in appropriately out of phase relationship.

11. Apparatus according to any one of claims 2 to 8, in which the vertically movable elements are driven up and down by respective variable speed motors which are electronically controlled, the control means being such that they can be programmed to produce the sizes and shapes of ripples or movements which are appropriate to progress a particular diameter of pipe along the firing chamber.

12. Apparatus according to any one of claims 2 to 11, in which the pipes are caused to roll on support surfaces which are downwardly inclined, through at least a part of the kiln, whereby said pipes tend to roll forwards under their own weight and the vertically movable elements are arranged to apply a reduced pressure to the pipes to progress them or to apply a retarding pressure.

_FIG.1_

_FIG. 2_

_FIG. 3_

*FIG.4a*

*FIG.4b*

*FIG.4c*

*FIG.4d*

*FIG.4e*

*FIG.4f*

FIG.5

FIG.6

FIG.7

| | DOCUMENTS CONSIDERED TO BE RELEVANT | | EP 89307242.1 |
|---|---|---|---|
| Category | Citation of document with indication, where appropriate, of relevant passages | Relevant to claim | CLASSIFICATION OF THE APPLICATION (Int. Cl.) 5 |
| X | FR - A - 1 204 529 (STEIN & ROUBAIX) * Fig. 1-4 * | 1 | F 27 B 9/24 |
| A | | 2,3,5, 12 | |
| A | US - A - 1 335 648 (BLOCKOUSE) * Fig. 2 * | 1,2,3, 12 | |
| A | DE - A1 - 2 847 366 (SIEMENS) * Drawings * | 1,2,3, 12 | |
| A | GB - A - 2 184 083 (FABRICATED METALS) * Fig. 1-4 * | 1,2,3, 12 | |
| A | FR - A - 2 112 646 (COMPAGNIE) * Page 2, lines 28-30 * | | TECHNICAL FIELDS SEARCHED (Int. Cl.) 5 |
| | | | B 28 B B 65 G F 27 B F 27 D |

The present search report has been drawn up for all claims

| Place of search | Date of completion of the search | Examiner |
|---|---|---|
| VIENNA | 13-09-1989 | GLAUNACH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82